# EUROPEAN PATENT APPLICATION

(11) **EP 4 847 352 A1**
(43) Date of publication of application: **02.12.2026**
(21) Application number: 26181903.1
(22) Date of filing: 29.05.2026
(51) Int. Cl.: B62D 25/20, B60P 7/08, B60R 13/01, E04F 15/02, E04F 21/00

(54) **IMPROVED SNAP FIT CONNECTION FOR AN ALUMINUM FLOORING PANEL**

(30) Priority: 29.05.2025 US 202563813663 P; 16.09.2025 US 202563882606 P
(71) Applicant: BraunAbility Europe AB, 443 61 Stenkullen (SE)
(72) Inventor: SVENSSON, John, 44361 Åkerivägen (SE); KROJGAARD, Claus, 44361 Åkerivägen (SE)
(74) Representative: Palmer, Benjamin Jeffrey

(57) **Abstract**

The present invention relates to a flooring system for vehicle applications, featuring a robust snap-fit mechanism using extruded aluminum profiles. The system comprises a first and second panel, each with a two-dimensional profile including a hinge interface and a locking interface. The hinge interface allows rotational engagement, ensuring panels are inseparable when coplanar. The locking interface includes a cantilevered arm and snap members that form a secure, stable connection, reducing noise and preventing misalignment. To achieve a precise fit, the panels are manufactured by an extrusion process with specific tight tolerances. A novel assembly method, involving partial angular engagement of the panels followed by longitudinal sliding and final rotational locking, facilitates the installation of these high-precision panels. The invention thereby provides a durable and robust flooring solution that addresses common issues in traditional systems.

## Description

### CROSS REFERENCE TO OTHER APPLICATIONS

This application incorporates by reference the disclosures of U.S. Provisional Patent Application No. 63/813,663, filed on May 29, 2025 and U.S. Provisional Patent Application No. 63/882,606, filed September 16, 2025.

### FIELD OF THE DISCLOSURE

The present disclosure relates generally to flooring systems, specifically designed for vehicle adaptations such as wheelchair accessible vehicles. More particularly, it concerns a snap-together flooring system utilizing extruded aluminum profiles with a unique hinge and locking interface, as well as methods for manufacturing and assembling such a system to ensure a secure and stable assembly.

### BACKGROUND

In the automotive industry, particularly for panel van adaptations, wheelchair accessible vehicles, public transport vehicles, ambulances, and police vehicles, traditional aluminum flooring panel systems often struggle with stability and rigidity due to the design of their snap-fit connections. These prior art systems are typically manufactured with large tolerances to accommodate wear in the extrusion dies, leading to connections that are significantly looser compared to glued joints.

This looseness in the joints results in two primary issues during and after installation. Firstly, adjacent panels may become misaligned in the longitudinal direction. Such misalignment can make it impossible to properly mount seats onto parallel tracks located on the top surface of the panels, as the tracks require precise alignment to function correctly. Secondly, any play in the connections increases the likelihood of the floor producing unwanted noise. This is particularly problematic when the vehicle's chassis flexes, such as when driving over speed bumps or uneven roads, compromising the overall comfort and quietness of the vehicle interior.

Addressing these challenges is essential for developing a more reliable and effective flooring system for use in vehicle adaptations.

### SUMMARY OF THE EMBODIMENTS

According to one embodiment of the invention, a flooring system comprises a first flooring panel and a second flooring panel, each having a corresponding edge. The corresponding edges are configured to snap together; they comprise a two-dimensional profile defining a hinge interface and a locking interface. The hinge interface includes a first hinge member on the corresponding edge of the first panel and a second hinge member on the corresponding edge of the second panel. These hinge members are designed to engage when the panels are brought together at an angle and allow rotation relative to each other about the hinge interface. They are further configured to be inseparable when the panels are approximately coplanar. The locking interface includes a cantilevered arm and a first snap member on the corresponding edge of the first panel and a stabilizing surface and a second snap member on the corresponding edge of the second panel. The snap members mate to define a locked condition when the hinge members are engaged and the panels are coplanar; the cantilevered arm and the stabilizing surface touch at a contact area directly below the hinge interface. This configuration provides a secure and stable connection between panels, reducing noise and misalignment.

According to one embodiment of the invention, the flooring system comprises extruded aluminum profiles for the first and second panels. This ensures lightweight and durable construction suitable for vehicle applications.

According to one embodiment of the invention, the hinge interface extends along the entire length of the two panels, providing consistent engagement and stability along the joint.

According to one embodiment of the invention, the hinge interface is adjacent to the top surface of the flooring system, facilitating easy assembly and integration with other vehicle components.

According to one embodiment of the invention, the locking interface extends along the entire length of the two panels, ensuring a continuous and secure connection.

According to one embodiment of the invention, the locking interface is adjacent to the bottom surface of the flooring system, providing additional structural support and stability.

According to one embodiment of the invention, the top surface comprises at least two tracks configured to lockingly receive a vehicle seat, allowing for flexible and secure seating arrangements.

According to one embodiment of the invention, one of the hinge members comprises a hook member, and the other comprises a curved channel to receive the hook member, enhancing the locking mechanism and assembly ease.

According to one embodiment of the invention, the first hinge member comprises the hook member, and the second hinge member comprises the curved channel.

According to one embodiment of the invention, the panels are in tension at the hinge interface when the locking interface is locked, increasing structural integrity and rigidity and preventing one of the panels from tilting upward thereby maintaining both panels flush with the floor of the vehicle.

According to one embodiment of the invention, the cantilevered arm comprises a corresponding surface that touches the stabilizing surface at the contact area when locked, providing additional friction and stability.

According to one embodiment of the invention, the corresponding surface is substantially flat, ensuring an even distribution of forces and enhancing stability.

According to one embodiment of the invention, the stabilizing surface is substantially flat, contributing to a secure and stable engagement.

According to one embodiment of the invention, the stabilizing surface is approximately parallel to the bottom surface of the second panel, ensuring optimal contact and stability.

According to one embodiment of the invention, the stabilizing surface is oriented at an angle of approximately 1° relative to the bottom surface, sloping upward toward an opposite edge of the panel, ensuring that the contact area is directly underneath the hinge interface.

According to one embodiment of the invention, the hinge interface defines a rotational point, with the contact area directly below it.

According to one embodiment of the invention, one snap member is a projection, and the other is a detent.

According to one embodiment of the invention, the first snap member is the projection, and the second snap member is the detent.

According to one embodiment of the invention, the first snap member is at the free end of the cantilevered arm, optimizing leverage and locking force.

According to one embodiment of the invention, the corresponding surface is between a base and the free end of the arm.

According to one embodiment of the invention, the second snap member is at the inner end of the stabilizing surface.

According to one embodiment of the invention, the cantilevered arm is spring-loaded, exerting force on the stabilizing surface when locked, enhancing locking force and stability.

According to another embodiment of the invention, a method for manufacturing a plurality of flooring panels for the flooring system is provided. The method comprises the step of extruding the plurality of flooring panels with specific, tight tolerances for key dimensions. These dimensions include, for example, the distance between the center point of the first hinge member and the center point of the second hinge member, and the distances defining the geometry of the locking interface. Manufacturing the panels to these high-precision tolerances can help achieve a stable, noise-free, and tightly-fitted final assembly.

In yet another embodiment, a method for assembling the flooring system is provided. The method comprises the steps of: (a) angularly engaging only a portion of the length of the first hinge member of a first flooring panel with the second hinge member of a second flooring panel to engage the hinge interface; (b) while the hinge members are engaged, sliding the first flooring panel longitudinally relative to the second panel to a desired final position; and (c) rotating the first flooring panel about the hinge interface into a substantially coplanar orientation to engage the locking interface. This method facilitates easy installation, especially of long panels, and can help enable the successful assembly of panels manufactured with tight tolerances.

### BRIEF DESCRIPTION OF DRAWINGS

The invention can be better understood with reference to the following drawings and description. The components in the figures are not necessarily to scale, emphasis instead being placed upon illustrating various preferred embodiments of the invention.
FIG. 1 is a cross-sectional view showing the profiles of the flooring system in a fully assembled state, highlighting the hinge and locking interfaces.
FIG. 2 is a cross-sectional view showing the profiles of the flooring system in a partially assembled state, demonstrating the assembly process before the final snap-fit connection.
FIG. 3 is an enlarged, partial cross-sectional view of the corresponding edges of the first and second flooring panels, highlighting key dimensional relationships of the hinge and locking interfaces.
FIG. 4 is a cross-sectional view of a flooring panel profile, highlighting a key dimensional relationship between the center points of its hinge members.
FIG. 5 is a perspective view illustrating an initial step of an exemplary assembly method, wherein a first flooring panel and a second flooring panel are angularly engaged and partially overlapped, with arrows indicating the longitudinal sliding motion used for positioning.
FIG. 6 is a perspective view illustrating an intermediate step of the assembly method, showing the first and second flooring panels angularly engaged and longitudinally aligned with their ends flush, prior to final locking.
FIG. 7 is a perspective view illustrating the final, fully engaged state of the assembly method, wherein the first flooring panel has been rotated into a coplanar orientation with the second flooring panel, showing the panels locked together with their ends flush.
FIG. 8 is a cross-sectional view illustrating an alternative, modified profile of a flooring panel, wherein portions of the hinge member and snap member are removed to enable linear horizontal assembly.
FIG. 9 is a cross-sectional view showing an alternative embodiment of a flooring system utilizing panels with a dedicated glued-type connection profile for joining floor halves.

Corresponding reference numerals are used to indicate corresponding parts throughout the several views.

It should be understood that the drawings are not necessarily to scale and that the embodiments are sometimes illustrated by graphic symbols, phantom lines, diagrammatic representations and fragmentary views. In certain instances, details which are not necessary for an understanding of the embodiments described and claimed herein or which render other details difficult to perceive may have been omitted. It should be understood, of course, that the inventions described herein are not necessarily limited to the particular embodiments illustrated. Indeed, it is expected that persons of ordinary skill in the art may devise a number of alternative configurations that are similar and equivalent to the embodiments shown and described herein without departing from the spirit and scope of the claims.

### DETAILED DESCRIPTION OF THE EMBODIMENTS

The embodiments of the present disclosure described below are not intended to be exhaustive or to limit the disclosure to the precise forms disclosed in the following detailed description. Rather, the embodiments are chosen and described so that others skilled in the art may appreciate and understand the principles and practices of the present disclosure. Any alterations and further modifications in the described embodiments and any further applications of the principles of the inventions as described herein are contemplated as would normally occur to one skilled in the art. Although a limited number of embodiments are shown and described, it will be apparent to those skilled in the art that some features that are not relevant to the claimed inventions may not be shown for the sake of clarity.

In one embodiment, a flooring system 1 is designed for vehicle applications, utilizing extruded aluminum profiles for lightweight and durable construction. The system comprises a first flooring panel 10 and a second flooring panel 20, each having corresponding edges 11, 21, respectively, that are configured to snap together through a two-dimensional locking geometry or profile. The first flooring panel 10 is a 78 mm rail panel having a track 80 on its top surface 40, while the second panel 20 is a 69 mm spacer rail. In a typical installation, a plurality of rail panels 10 and spacer panels 20 will be assembled together to define a plurality of parallel tracks 80. The tracks 80 may take form as L-track or A-track type or other type configured to received seat legs and other track fittings.

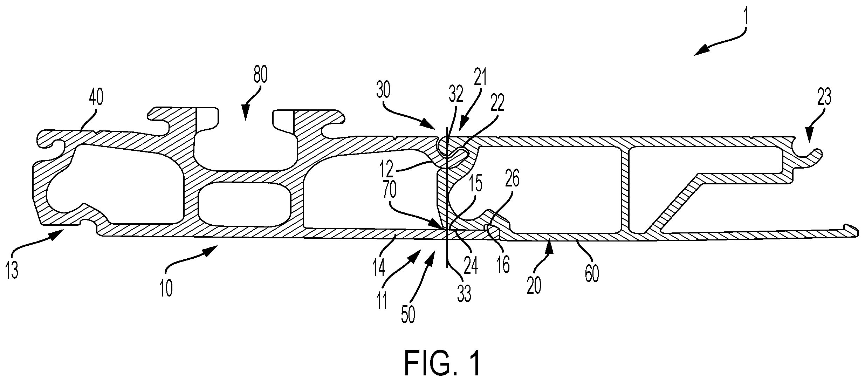

Referring to FIG. 1, the system is shown in a fully assembled state. The first panel 10 includes a first hinge member 12, a cantilevered arm 14, and a first snap member 16. As shown, the first hinge member 12 may take form as a hook member, the first snap member 16 may be disposed on the cantilevered arm 14, and/or the first snap member 16 may take form as a projection. The second panel 20 features a second hinge member 22, a stabilizing surface 24, and a second snap member 26. As shown, the second hinge member 22 may take form as a curved channel designed to receive the hook member, the second snap member 26 may be disposed at an inner end of the stabilizing surface 24, and/or the second snap member 26 may take form as a detent. In alternative embodiments, the first hinge member 12 may take form as a curved channel while the second hinge member may take form as a hook member. In yet additional embodiments, the first snap member 16 may take form as a detent and the second snap member 16 may take form as a projection.

In one embodiment, the first hinge member 12 and the second hinge member 22 are configured to engage whereby they collectively define a hinge interface 30 that in some embodiments extends along the entire length (into and out of the page) of the panels 10, 20. In some embodiments, including the one shown, the hinge interface 30 is positioned adjacent to a top surface 40 of the flooring system 1. When the first panel 10 and second panel 20 are flat and coplanar relative to each other, as shown, the first hinge member 12 and the second hinge member 22 are inseparable. In other words, they engage to prevent the corresponding edges 11, 21 from being pulled apart.

The first snap member 16, the second snap member 26, the cantilevered arm 14, and the stabilizing surface 24 collectively define a locking interface 50 that in some embodiments extends along the entire length of the panels (into and out of the page). In some embodiments, including the one shown, the locking interface 50 is situated adjacent to a bottom surface 60 of the floor system 1. As shown, the first locking member 16 and the second locking member 26 are configured to mate (the projection being received within the detent) and the cantilevered arm 14 and stabilizing surface 24 are configured to touch at a contact area 70, whereby the locking interface 50 is in a locked configuration.

In the locked configuration, the locking interface 50 not only resists separation of the corresponding edges 11, 21 by virtue of engagement between the locking members 16, 26, but also resists sliding of the panels 10, 20 along the edges 11, 12 in the longitudinal direction (in and out of the page) by virtue of friction between the cantilevered arm 14 and stabilizing surface 24 at the contact area 70.

In some embodiments, the contact area 70 is directly below (or approximately directly below) the hinge interface 30 (and/or the rotational point 32), which helps ensure that the two panels remain flat or coplanar relative to each other, preventing one of the panels from tilting upward relative to the other. Stated in other words, a line 33 drawn normal to the top and bottom surfaces 40, 60 and through the hinge interface 30 (or through the rotational point 32, as shown) will intersect the contact area 70. Moreover, the hinge interface 30 is in tension (both the to the right side and at least a small amount to the left side of the rotational point 32 of the hinge interface 30). This balanced tension helps maintain the panels 10, 20 in a coplanar arrangement, preventing any upward tilting that could occur if the locking interface 50 were in tension alone. Without tension in the hinge interface 30, the second panel 20 would tilt upward due to tension present in the locking interface 50.

The cantilevered arm 14 may comprise a substantially flat corresponding surface 15 which touches the stabilizing surface 24 at the contact area 70 in the locked configuration. In some embodiments, the corresponding surface 15 and stabilizing surface 24 may be approximately parallel in the locked configuration. The stabilizing surface 24 may also be substantially flat and parallel to the bottom surface 60 in some embodiments. In other embodiments, the stabilizing surface 24 may oriented at an angle of approximately 1°, sloping upward as it extends away from the corresponding edge 21 and toward the opposite edge 23. This configuration helps to ensure that the contact area 70 is positioned directly below the hinge interface 30, providing consistent contact pressure and enhanced stability.

In the locked configuration, the cantilevered arm 14 may be displaced slightly downward relative to its position in an unlocked configuration, whereby elasticity (resiliency) in the material of the cantilevered arm 14 creates a spring force pushing the cantilevered arm 14 against the stabilizing surface 24, enhancing frictional engagement and reducing noise and play in the joint.

Notably, the two floor panels 10, 20 are designed with features that allow a plurality of panels to be assembled into an expansive and customizable flooring system. In that regard, the opposite edge 23 of the second panel 20 may include the same hinge, arm, and locking features as the corresponding edge 11 of the first panel 10, allowing a third panel to be connected at the opposite edge 23. Likewise, the opposite edge 13 of the first panel 10 may include the same hinge, stabilizing surface, and locking features as the corresponding edge 21 of the second panel 20, allowing a fourth panel to be connected at the opposite edge 13.

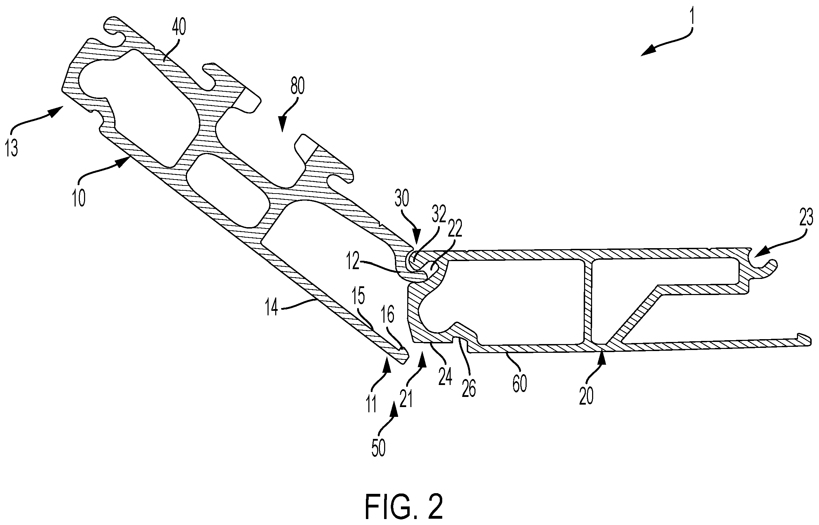

In FIG. 2, the system is shown in a partially assembled state. To interlock the adjacent panels, the first panel 10 is positioned at an angle to the second panel 20, which allows the first hinge member 12 to engage the second hinge member 22 (the hook being received within the curved channel). The first panel 10 is then rotated in a counterclockwise direction about the hinge interface 30 (in some embodiments, about the rotational point 32) until the panels are approximately. As the panels 10, 20 approach the coplanar state shown in FIG. 1, the cantilevered arm 14 of the first panel engages the stabilizing surface 24 on the second panel, with the first snap member 16 engaging the second snap member 26 to form the locking interface 50. This engagement ensures the panels are securely locked when coplanar. The first and second hinge members 12, 22 (defining the hinge interface 30) are configured to keep the panels 10, 20 partially engaged while allowing for relative rotation of the first panel 10 (as shown, in a counterclockwise direction) from the partially engaged position shown in FIG. 2 to the fully engaged (locked configuration) shown in FIG. 1. As the first panel 10 is rotated counterclockwise away from the angled configuration shown in FIG. 2, the hinge members 12, 22 become inseparable, ensuring a stable connection. In other words, the hinge members 12, 22 cannot be separated from each other without rotating the first panel 10 back to the angled configuration of FIG. 2.

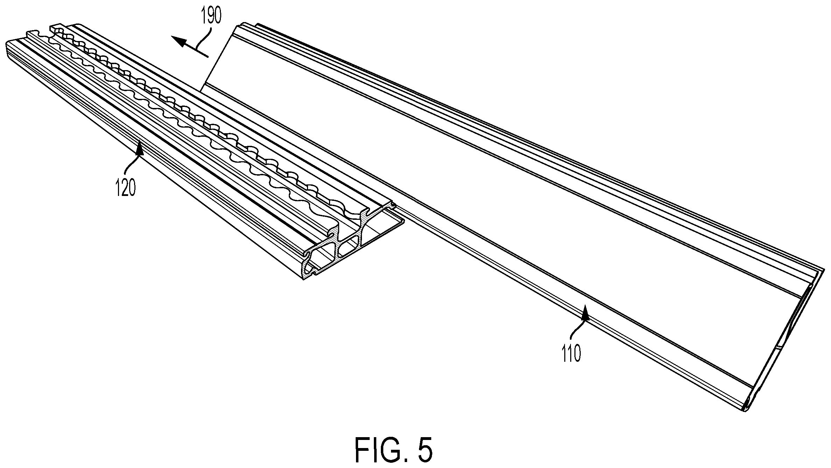

It is to be understood that the specific profiles of the corresponding edges may be configured in alternative arrangements. For instance, while the assembly process described with reference to FIG. 2 shows a first flooring panel 10 (the incoming panel) comprising the hook-shaped first hinge member 12 and the cantilevered arm 14, and a second flooring panel 20 (the previously placed panel) comprising the corresponding curved channel 22 and stabilizing surface 24, the roles of these features can be reciprocally arranged. In an alternative embodiment, as will be described with reference to FIGS. 5-7, the incoming first flooring panel 110 may comprise a hinge member 112 in the form of a curved channel and a stabilizing surface, while the previously placed second flooring panel 120 comprises a hinge member 122 in the form of a hook and a cantilevered arm. Both configurations and their respective assembly operations are contemplated as being within the scope of the present invention.

An exemplary method for assembling the flooring system 1 will now be described with reference to FIGS. 5-7. This method is particularly advantageous as it allows for the efficient installation of long flooring panels, often by a single operator, while ensuring precise alignment and a secure final connection. Critically, this assembly method enables the use of flooring panels manufactured with tighter tolerances, resulting in a superior, tighter final fit that would not be practically achievable with other assembly techniques.

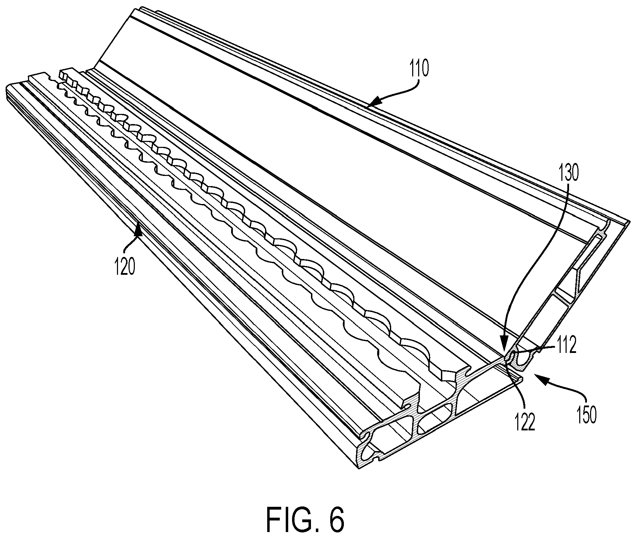

The assembly method commences with an initial angular engagement step, as illustrated in the perspective view of FIG. 5. This step involves holding a first flooring panel 110 at an angle relative to an adjacent, previously installed second flooring panel 120. The purpose of this angle is to create the necessary clearance for the first hinge member 112 on the first panel 110 to be physically engaged with the second hinge member 122 on the second panel 120. As seen best in FIGS. 6, this engagement may involve partially inserting a hook-shaped second hinge member 122 into a corresponding curved channel of the first hinge member 112, which establishes the hinge interface 130. To facilitate handling, especially with long panels, the first flooring panel 110 is only partially overlapped with the second flooring panel 120, whereby only a portion of the first panel's length is initially engaged in this manner.

This technique of engaging only a portion of the panel's length is a significant advantage over attempting to angularly engage the full length of two panels that are already fully overlapped with their ends flush. For panels manufactured with the tight tolerances required for a stable, noise- and play-free floor, attempting a full-length engagement at once would be difficult, if not impossible. Minor variations or deviations in the extrusion profile, even within tight tolerance ranges, can accumulate over the length of the panel. This cumulative error would cause binding and prevent the hinge interface from engaging smoothly along its entire length. By engaging a shorter, manageable section first, the method bypasses this binding issue and allows for an easy initial connection. Accordingly, while the present assembly method is useful for installing panels having various manufacturing tolerances, it is particularly advantageous for assembling flooring panels manufactured with the high-precision tolerances described hereinafter, as it uniquely facilitates the installation of panels whose tight fit would otherwise make them prone to binding.

Following the initial engagement of the hinge members, a longitudinal positioning step is performed. As indicated by the arrow 190 in FIG. 5, while maintaining the angular engagement, the first panel 110 is slid longitudinally relative to the second panel 120. This sliding action allows the installer to move the first panel 110 a distance into its final desired longitudinal position, such as with its ends flush, as shown in FIG. 6.

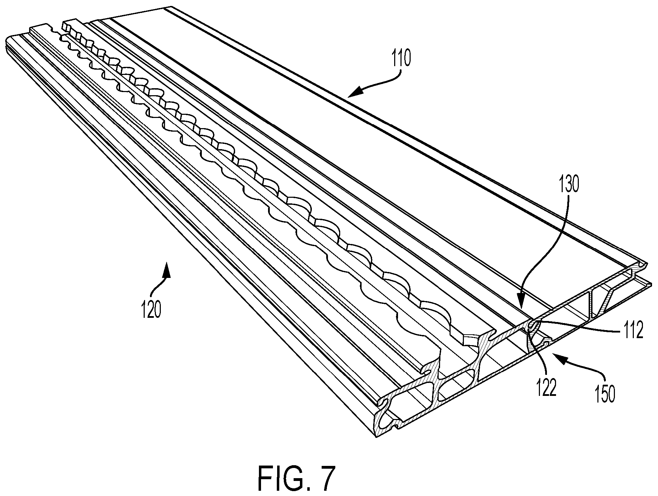

Once the first panel 110 is in the desired longitudinal position, the final step of rotational locking is performed. A downward force is applied to the first panel 110, causing it to rotate about the hinge interface 130 toward a substantially coplanar position with the second panel 120. This rotation brings the locking interface 150 into full engagement, resulting in the final, locked state shown in FIG. 7. This method thereby enables the successful assembly of a high-precision, tightly-fitted flooring system.

It is to be understood that the fundamental assembly method comprising the steps of angularly engaging a portion of the panels, sliding them into a desired longitudinal position, and rotating them into a coplanar orientation provides significant advantages in itself. This method facilitates the assembly of tightly-fitted panels regardless of the specific mechanism that secures the final coplanar state. While the disclosed embodiment includes a locking interface 150 that engages during the final rotation, the assembly method is equally applicable to flooring systems where the final coplanar orientation is secured by other means, such as high-friction contact, an adhesive bond, or other mechanical fasteners that are engaged upon achieving the flat, assembled state.

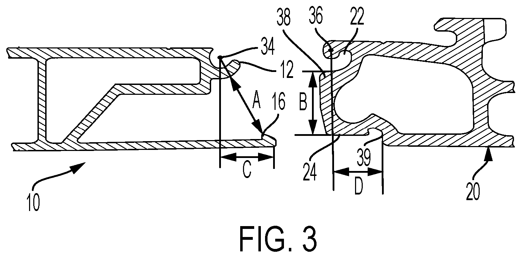

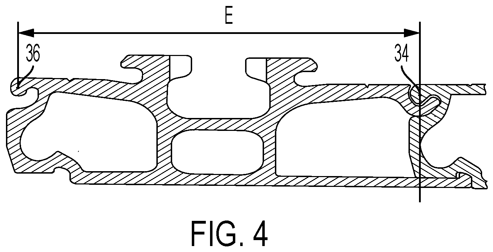

With reference to FIGS. 3 and 4, there are several dimensions and/or tolerances that can improve the assembly of individual planks and the final full floor. Dimension A is the distance between the first hinge member 12 and the first snap member 16 along a radial from a center point 34 of the first hinge member 12. Dimension B is the distance between a lower edge of the second hinge member 22 and the stabilizing surface 24 along a radial from a center point 36 of the second hinge member 22. Dimension C is the length of the cantilevered arm 14 between the center point 34 of the first hinge member 12 and the tip of the first snap member 16 in a plane parallel to the top surface 40 of the panel. Dimension D is the distance between the center point 36 of the second hinge member 22 and the inner edge 39 of the second snap member 26 in a plane parallel to the top surface 40 of the panel. Dimension E is the distance between the center point 34 of the first hinge member 12 and the centerpoint 36 of the second hinge member 22 on a single panel 20. In one embodiment, Dimension A is 12.99 mm with tolerances of +0.00 and - 0.75, Dimension B is 12.22 mm with tolerances of ±0.20, Dimension C is 10.57 mm with tolerances of ±0.25, Dimension D is 10.31 mm with tolerances of ±0.25, and Dimension E is 78.00 mm with tolerances of ±0.40. In other embodiments, the dimensions and tolerances may vary slightly. For instance, the lower end of the tolerance for Dimension A in other embodiments may vary from - 0.65 to -0.8 and the tolerance for Dimension E may vary from ±0.40 to ±1. Dimensions A and B determine how much the click arm needs to defect before it snaps in to place. Maintaining Dimension B between approximately 1.32-0.97 mm less than and approximately 0.08-0.2 greater than Dimension A can help ensure that both long (4300 mm) and short (200 mm) pieces work within the whole tolerance range. Dimension E shows the relevant total width of a given panel, where a deviation larger than the allowed tolerance of approximately ±0.40 can affect center to center ("C-C") dimensions between two tracks 80 on separate assembled panels. This would make it more difficult or even impossible to install certain seat legs or other products that are sensitive to C-C. Dimensions C and D are closely related to the overall flatness of the floor. If the click arm is shorter the floor will become more convex. Maintaining Dimension D between approximately 0.76 less than and approximately 0.24 more than Dimension C can help maintain the floor in a flat configuration. Dimensions outside that range may cause the floor to be convex or concave at the joints.

In many practical applications, installers may find it efficient to pre-assemble individual flooring panels (10, 20) outside the vehicle into larger sections, such as a left floor half and a right floor half. These halves are then brought into the vehicle and joined together in a final installation step. Different markets and vehicle configurations can lead to different preferred installation workflows. For example, in the United Kingdom, where vehicles often have a sliding door on the left side, it is common practice for installers to secure the right floor half to the vehicle floor first and then connect the left floor half to it in a right-to-left assembly sequence.

When using the rotationally-engaging profiles as described previously (e.g., with the geometry of FIG. 2), this right-to-left assembly of two floor halves presents a significant practical difficulty. Once the right floor half is secured to the vehicle floor, often with adhesive, its position becomes fixed. When the installer attempts to connect the incoming left floor half by rotation, the cantilevered arm (14) on the edge of the left half must deflect downwards to engage the locking interface 50 on the fixed right half. This downward deflection path is physically blocked by the vehicle floor itself. Consequently, rotational engagement becomes impossible or extremely difficult without either lifting the already-secured right floor half, which would compromise its adhesive bond, or requiring the installer to exert great physical force to bend the arm into the limited space.

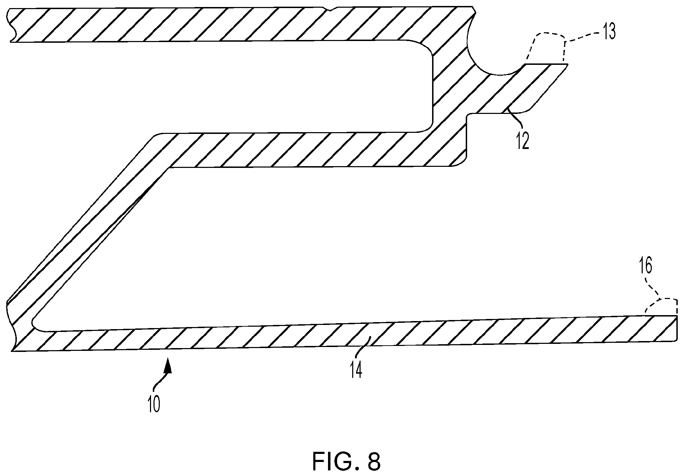

To solve this specific installation challenge and enable greater assembly flexibility, an alternative embodiment of the flooring panel profile is provided, as shown in the exemplary cross-section of FIG. 8. This figure illustrates a modified profile applied, for example, to the first panel 10. In this embodiment, material is selectively removed from two key areas of the profile. First, the projecting tip of the hook-shaped first hinge member 12 is removed. Second, the first snap member 16, which is located at the end of the cantilevered arm 14, is also removed. With these modifications made to the first panel 10, the mating second panel 20 can retain its original, unmodified profile, as no changes are needed on its corresponding edge to enable the horizontal engagement.

This structural modification reconfigures the interfaces to permit a direct, horizontal assembly motion. At the hinge interface, removing the interfering portion-such as the tip or upper surface of the hook-shaped first hinge member 12 or, alternatively, a portion of the top wall of the curved channel of the second hinge member 22-transforms the connection. Instead of requiring a rotational "hooking" action, the modified members are profiled to allow for non-interfering, linear insertion where they slide directly into one another. The resulting engagement functions in a manner analogous to a horizontal tongue-and-groove connection, designed primarily to provide robust vertical alignment and resist relative vertical movement. Concurrently, at the locking interface, the physical obstruction that would otherwise necessitate downward deflection of the cantilevered arm is eliminated. This can be achieved by removing either the first snap member 16 from the cantilevered arm 14, or alternatively, by removing the stabilizing surface 24 from the second panel 20, as the stabilizing surface 24 acts as the leading edge that obstructs the path to the second snap member 26. This modification provides a clear, unobstructed path for the cantilevered arm 14 to slide horizontally into its final position without requiring substantial deflection.

This structural modification enables a simplified assembly method where the two floor halves are aligned horizontally and simply pushed together with a linear force until the interfaces are fully engaged. The primary function of this modified joint is to provide robust vertical alignment, ensuring the top surfaces of the two halves remain perfectly flush to form a continuous and stable floor. While this profile is not primarily designed to resist horizontal separation, this function is synergistically provided by the adhesive bond that secures the floor halves to the vehicle floor, making a dedicated horizontal lock in this specific joint redundant in the final assembly. This embodiment provides a versatile and practical solution that eliminates the installation obstruction, simplifies the final assembly step, and enables installers to use their preferred workflow, whether right-to-left or left-to-right.

While this horizontal assembly profile is particularly advantageous for joining pre-assembled floor halves, it is to be understood that its use is not exclusively limited to that application. This method and profile may also be beneficially employed for the installation of individual flooring panels in any situation where space constraints or other obstructions make rotational engagement difficult.

It is to be understood that the combination of rotational and linear assembly methods, and the profile modification that enables it, are contemplated to be implemented in various commercial and practical scenarios. For example, the overall method of assembling a flooring system by first pre-assembling flooring sections using the rotational engagement method and subsequently joining these sections within a vehicle using the linear horizontal engagement method represents a complete and inventive process in itself, regardless of when or by whom the necessary panel modifications are made. In one contemplated scenario, the flooring panels intended for linear engagement may be manufactured with the modified profile and provided to an end-user or installer in a pre-modified state, for instance as part of a vehicle-specific installation kit. In another contemplated scenario, an installer may acquire standard, rotationally-engaging flooring panels and perform the modification step themselves on-site, retrofitting the mating edges of the relevant panels just prior to the final horizontal assembly step. Accordingly, the present disclosure is intended to encompass the overall hybrid assembly method, the use of pre-modified panels within that method, and the on-site modification of panels as part of the method.

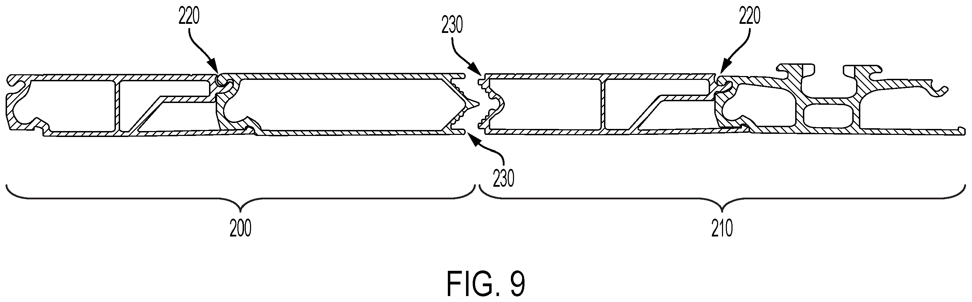

In yet another alternative embodiment, a dedicated profile is provided to solve the specific challenge of joining large, pre-assembled floor halves 200, 210 within a vehicle, as illustrated in the exemplary system of FIG. 9. This approach avoids the need for on-site modification of panels and instead utilizes panels specifically designed for a hybrid assembly workflow.

In this embodiment, the flooring system is constructed from a combination of panel types to facilitate the hybrid assembly. The majority of panels used to pre-assemble the larger sections (e.g., a left floor half 200 and a right floor half 210) are fabricated with the same mechanical locking connection 220, such as the rotational snap-fit connection described above, on both of their opposing longitudinal edges. This allows them to be sequentially joined to one another mechanically, without the need for glue.

However, the specific panels intended to be positioned at the central seam of the final floor are fabricated with two different connection profiles on their opposing longitudinal edges. On one edge, these panels feature the mechanical locking connection 220, allowing them to connect to the preceding panel within their respective floor half. The opposite edge of these panels, which is destined to form the mating edge of the floor half, features the second, different profile-the glued-type connection 230. This configuration ensures that each completed floor half has an inward-facing array of mechanical connections and a single, outward-facing glued-type connection profile for the final in-vehicle assembly.

This glued-type connection profile 230 is engineered to provide robust vertical alignment and a surface for adhesive bonding. Its geometry, which may be analogous to a ship-lap or tongue-and-groove joint, is designed to allow the mating edges of the two floor halves to be engaged by simple linear, horizontal sliding while they are both lying flat on the vehicle floor. This eliminates the need for rotation or vertical deflection that is characteristic of the rotational mechanical snap-fit connection, or the type of force that would be required for a horizontal mechanical snap-fit connection.

The installation method using this embodiment proceeds as follows:

First, a left floor half 200 and a right floor half 210 are pre-assembled (inside or outside the vehicle) by joining the required panels using their mechanical locking connections 220. The resulting floor halves are constructed such that their mating edges feature the corresponding glued-type connection profiles 230.

If assembled outside of the vehicle, the completed floor halves 200, 210are then placed inside the vehicle.

An adhesive is applied to one or both of the mating glued-type profiles 230.

Finally, the two halves are pushed together horizontally until their mating edges are fully engaged. The profile ensures the top surfaces remain perfectly flush, and the adhesive cures to form a strong, permanent bond that prevents horizontal separation.

This method combines the benefits of different connection types for different assembly stages: the precision and reusability of the mechanical lock 220 for building sections, and the simplicity and strength of an adhesively bonded, horizontally-sliding joint 230 for the final in-vehicle installation.

In alternative embodiments, the flooring system may include variations in the extruded profiles to accommodate different vehicle designs or specific applications. Additional features, such as integrated wiring channels and HVAC ducts, can be incorporated into the profiles to enhance functionality without compromising the structural integrity.

The invention provides significant advantages by addressing common issues of play, noise and misalignment found in traditional flooring systems. The firm engagement of the hinge and locking interfaces provides a secure and stable connection adaptable for various vehicle configurations. The inventive concept delivers a robust flooring solution that is easy to assemble, stable, and adaptable, meeting the demands of modern vehicle applications and providing a durable, long-lasting solution.

While exemplary embodiments incorporating the principles of the present disclosure have been disclosed hereinabove, the present disclosure is not limited to the disclosed embodiments. Instead, this application is intended to cover any variations, uses, or adaptations of the disclosure using its general principles. Further, this application is intended to cover such departures from the present disclosure as come within known or customary practice in the art to which this disclosure pertains and which fall within the limits of the appended claims.

### INVENTIVE CLAUSES

Clause 1. A flooring system comprising a first flooring panel and a second flooring panel, each having a corresponding edge, wherein:
   the corresponding edges are configured to snap together;
   the corresponding edges comprise a two-dimensional profile defining a hinge interface and a locking interface;
   the hinge interface includes a first hinge member disposed on the corresponding edge of the first panel and a second hinge member disposed on the corresponding edge of the second panel;
   the first hinge member and the second hinge member are configured to engage when the corresponding edges of the first panel and the second panel are brought together at an angle relative to each other and to allow rotation of the first panel and the second panel relative to each other about the hinge interface;
   the first hinge member and the second hinge member are further configured to be inseparable when the first panel and the second panel are approximately coplanar;
   the locking interface includes a cantilevered arm and a first snap member disposed on the corresponding edge of the first panel and a stabilizing surface and a second snap member disposed on the corresponding edge of the second panel;
   the first snap member and the second snap member are configured to mate and define a locked condition for the locking interface when the first hinge member and the second hinge member are engaged and the first panel and the second panel are approximately coplanar;
   the cantilevered arm and the stabilizing surface are configured to touch at a contact area when the locking interface is in the locked condition; and
   the contact area is disposed directly below the hinge interface.
Clause 2. The flooring system according to clause 1, wherein the first panel and the second panel are extruded aluminum profiles.
Clause 3. The flooring system according to clause 1 or 2, wherein the hinge interface extends along the entire length of the two panels.
Clause 4. The flooring system according to any one of the preceding clauses, wherein the hinge interface is disposed adjacent a top surface of the flooring system.
Clause 5. The flooring system according to any one of the preceding clauses, wherein the locking interface extends along the entire length of the two panels.
Clause 6. The flooring system according to any one of the preceding clauses, wherein the locking interface is disposed adjacent a bottom surface of the flooring system.
Clause 7. The flooring system according to any one of the preceding clauses, wherein the top surface of the flooring system comprises at least two tracks configured to lockingly receive a vehicle seat.
Clause 8. The flooring system according to any one of the preceding clauses, wherein one of the first hinge member and the second hinge member comprises a hook member, and the other comprises a curved channel configured to receive the hook member.
Clause 9. The flooring system according to clause 8, wherein the first hinge member comprises the hook member and the second hinge member comprises the curved channel.
Clause 10. The flooring system according to any one of the preceding clauses, wherein the first panel and the second panel are in tension at the hinge interface when the locking interface is in the locked condition.
Clause 11. The flooring system according to any one of the preceding clauses, wherein the cantilevered arm comprises a corresponding surface that touches the stabilizing surface at the contact area when the locking interface is in the locked condition.
Clause 12. The flooring system according to clause 11, wherein the corresponding surface is substantially flat.
Clause 13. The flooring system according to any one of the preceding clauses, wherein the stabilizing surface is substantially flat.
Clause 14. The flooring system according to any one of the preceding clauses, wherein the stabilizing surface is approximately parallel to a bottom surface of the second panel.
Clause 15. The flooring system according to any one of the preceding clauses, wherein the stabilizing surface is oriented at an angle of approximately 1° relative to the bottom surface of the second panel, with the stabilizing surface sloping upward toward an opposite edge of the second panel.
Clause 16. The flooring system according to any one of the preceding clauses, wherein the hinge interface defines a rotational point about which the first panel and the second panel rotate relative to each other, and wherein the contact area is disposed directly below the rotational point.
Clause 17. The flooring system according to any one of the preceding clauses, wherein one of the first snap member and the second snap member is a projection, and the other one of the first snap member and the second snap member is a detent.
Clause 18. The flooring system according to clause 17, wherein the first snap member is the projection and the second snap member is the detent.
Clause 19. The flooring system according to any one of the preceding clauses, wherein the first snap member is disposed at a free end of the cantilevered arm.
Clause 20. The flooring system of clause 19, when dependent upon clause 11, wherein the corresponding surface is disposed between a base and the free end of the cantilevered arm.
Clause 21. The flooring system according to any one of the preceding clauses, wherein the second snap member is disposed at an inner end of the stabilizing surface.
Clause 22. The flooring system according to any one of the preceding clauses, wherein the cantilevered arm is spring-loaded and exerts a force on the stabilizing surface when the locking interface is in the locked condition.
Clause 23. The flooring system according to any one of the preceding clauses, wherein a distance between a lower edge of the second hinge member and the stabilizing surface along a radial from a center point of the second hinge member is between approximately 1.4 mm less than and approximately .2 mm greater than a distance between the first hinge member and the first snap member along a radial from a center point of the first hinge member.
Clause 24. The flooring system according to clause 23, wherein the distance between the lower edge of the second hinge member and the stabilizing surface along the radial from a=the center point of the second hinge member is between approximately 1 mm less than and approximately .1 mm greater than the distance between the first hinge member and the first snap member along the radial from the center point of the first hinge member.
Clause 25. The flooring system according to any one of the preceding clauses, wherein a distance between a center point of the second hinge member and an inner edge of the second snap member in a plane parallel to a top surface of the flooring system is between approximately 0.75 mm less than and approximately 0.25 mm more than a distance between a center point of the first hinge member and a tip of the first snap member in a plane parallel to the top surface of the flooring system.
Clause 26. A method for manufacturing a plurality of flooring panel, wherein each of the plurality of flooring panels comprises a first hinge member on a first edge and a second hinge member on a second edge, and wherein the first hinge member of a first flooring panel of the plurality of flooring panels is configured to hingedly engage with the second hinge member of a second flooring panel of the plurality of flooring panels, the method comprising the step of extruding the plurality of flooring panels with a tolerance of less than approximately ±1 for a distance between a center point of the first hinge member and a center point of the second hinge member.
Clause 27. The method of clause 26, wherein the tolerance is less than approximately ±0.4.
Clause 28. A method for manufacturing a plurality of flooring panel for the flooring system of clause 1, the method comprising the step of extruding the plurality of flooring panels with at least one of: a tolerance of between approximately +0.00 and approximately -0.8 for a distance between the first hinge member and the first snap member along a radial from a center point of the first hinge member; a tolerance of less than approximately ±0.2 for a distance between a lower edge of the second hinge member and the stabilizing surface along a radial from a center point of the second hinge member; a tolerance of less than approximately ±0.25 for a distance between the center point of the first hinge member 12 and a tip of the first snap member in a plane parallel to a top surface of the flooring system; a tolerance of less than approximately ±0.25 for a distance between the center point of the second hinge member and an inner edge of the second snap member in a plane parallel to the top surface of the flooring system; and a tolerance of less than approximately ±1 for a distance between a center point of the first hinge member and a center point of the second hinge member.
Clause 29. The method of clause 28, wherein the plurality of flooring panels are extruded with a tolerance of between approximately +0.00 and approximately -0.65 for the distance between the first hinge member and the first snap member along the radial from the center point of the first hinge member.
Clause 30. The method of clause 28, wherein the plurality of flooring panels are extruded with a tolerance of less than approximately ±0.4 for the distance between the center point of the first hinge member and the center point of the second hinge member.
Clause 31. A method for assembling a flooring system comprising a first flooring panel and a second flooring panel each having a corresponding edge, wherein:
   the first flooring panel includes a first hinge member on its corresponding edge;
   the second flooring panel includes a second hinge member on its corresponding edge;
   the first hinge member and the second hinge member are configured to engage and define a hinge interface when the corresponding edges of the first panel and the second panel are brought together at an angle relative to each other and to allow rotation of the first panel and the second panel relative to each other about the hinge interface into a substantially coplanar orientation; and
   the method comprises the steps of:
      (a) angularly engaging a portion of a length of the first hinge member of the first flooring panel with the second hinge member of the second flooring panel to thereby engage the hinge interface;
      (b) while the first hinge member is angularly engaged with the second hinge member, sliding the first flooring panel longitudinally relative to the second flooring panel to a desired longitudinal position; and
      (c) rotating the first flooring panel relative to the second flooring panel about the hinge interface to the substantially coplanar orientation.
Clause 32. The method of clause 31, wherein:
   the first flooring panel includes a first locking member on its corresponding edge;
   the second flooring panel includes a second locking member on its corresponding edge;
   the first locking member and second locking member engage to define a locking interface when the first flooring panel is rotated to the substantially coplanar orientation relative to the second flooring panel in step (c).
Clause 33. The method of clause 31 or 32, wherein the desired longitudinal position is a position wherein ends of the first flooring panel and the second flooring panel are substantially flush.
Clause 34. The method of any one of clauses 31-33, wherein the portion of the length of the first hinge member engaged with the second hinge member in step (a) is approximately 1.5 meters or less.
Clause 35. The method of any one of clauses 31-34, wherein in step (b) the first flooring panel and the second flooring panel are held at an angle of approximately 45 degrees relative to each other.
Clause 36. The method of any one of clauses 31-35, wherein the flooring system is assembled in a vehicle.
Clause 37. The flooring system of any one of clauses 1-25 manufactured according to the method of any one of clauses 26-30.
Clause 38. The method of any one of clauses 31-36, wherein the first flooring panel and the second flooring panel are configured as set for in any one of clauses 1-25 and 37.
Clause 39. The method of any one of clauses 31-36, wherein the first flooring panel and the second flooring panel are manufactured according to the method of any one of clauses 26-30.
Clause 40. A method for modifying a flooring system, the flooring system comprising a first flooring panel and a second flooring panel each having a corresponding edge, the corresponding edge comprising a two-dimensional profile defining a hinge interface and a locking interface, the profile on the corresponding edge of the first panel comprising a first hinge member and a first locking member, and the profile on the corresponding edge of the second panel comprising a second hinge member and a second locking member, wherein the first hinge member and the second hinge member are configured to engage and define the hinge interface when the corresponding edges of the first panel and the second panel are brought together at an angle relative to each other, and wherein the first locking member and the second locking member are configured to mate and define a locked condition for the locking interface when the first flooring panel is rotated about the hinge interface until the first flooring panel and the second flooring panel are in an approximately coplanar position; the method comprising the step of:
   modifying the profile of at least one of the corresponding edges to enable linear horizontal engagement of the first and second panels by removing material from at least one of the first hinge member and the second hinge member and at least one of the first locking member and the second locking member.
Clause 41. The method of clause 40, wherein the first hinge member comprises a hook member, and wherein modifying the profile comprises removing a tip portion of the hook member.
Clause 42. The method of clause 40 or 41, wherein the second hinge member comprises a curved channel having a top wall, and wherein modifying the profile comprises removing a portion of the top wall of the curved channel.
Clause 43. The method of any one of clauses 40-42, wherein the first flooring panel further comprises a cantilevered arm, wherein the first locking member is a snap member disposed on the cantilevered arm, and wherein modifying the profile comprises removing the snap member from the cantilevered arm.
Clause 44. The method of any one of clauses 40-43, wherein the second flooring panel further comprises a stabilizing surface acting as a leading edge to the second locking member, and wherein modifying the profile comprises removing the stabilizing surface.
Clause 45. A method for assembling a flooring system in a vehicle, the method comprising:
   providing and pre-assembling a first flooring section outside of the vehicle by rotatably engaging a plurality of first individual flooring panels, the first flooring section comprising a first mating edge;
   pre-assembling a second flooring section outside of the vehicle by rotatably engaging a plurality of second individual flooring panels, the second flooring section comprising a second mating edge configured to engage with the first mating edge by linear horizontal engagement;
   placing the first flooring section and the second flooring section within the vehicle; and
   linearly and horizontally engaging the first mating edge with the second mating edge to couple the first and second flooring sections together.
Clause 46. A method for assembling a flooring system in a vehicle, the method comprising:
   providing a first flooring panel having a first mating edge and a second flooring panel having a second mating edge, wherein at least one of the first mating edge and the second mating edge are modified according to the method of any one of clauses 40-44;
   assembling a first flooring section by rotatably engaging the first flooring panel with one or more other flooring panels, wherein the first mating edge forms an outward-facing edge of the first flooring section;
   assembling a second flooring section by rotatably engaging the second flooring panel with one or more other flooring panels, wherein the second mating edge forms an outward-facing edge of the second flooring section;
   placing the first flooring section and the second flooring section within the vehicle; and
   linearly and horizontally engaging the first mating edge with the second mating edge to couple the first and second flooring sections together.
Clause 47. A method for assembling a flooring system in a vehicle, the method comprising:
   providing a first flooring panel having a first mating edge and a second flooring panel having a second mating edge;
   modifying at least one of the first mating edge and the second mating edge according to the method of any one of clauses 40-44;
   assembling a first flooring section by rotatably engaging the first flooring panel with one or more other flooring panels, wherein the first mating edge forms an outward-facing edge of the first flooring section;
   assembling a second flooring section by rotatably engaging the second flooring panel with one or more other flooring panels, wherein the second mating edge forms an outward-facing edge of the second flooring section;
   placing the first flooring section and the second flooring section within the vehicle; and linearly and horizontally engaging the first mating edge with the second mating edge to couple the first and second flooring sections together.
Clause 48. A method for assembling a flooring system in a vehicle, the method comprising:
   assembling a first flooring section by connecting a plurality of first flooring panels to one another using a first type of connection profile configured for mechanical engagement, wherein the first flooring section comprises a first mating edge having a second type of connection profile;
   assembling a second flooring section by connecting a plurality of second flooring panels to one another using said first type of connection profile, wherein the second flooring section comprises a second mating edge configured to engage with the first mating edge, the second mating edge also having said second type of connection profile;
   wherein the second type of connection profile is distinct from the first type of connection profile and is configured to permit linear horizontal engagement of the first and second mating edges while the first and second flooring sections are supported on a substantially flat surface;
   applying an adhesive to at least one of the first and second mating edges; and
   linearly and horizontally sliding the first flooring section and the second flooring section toward one another to engage the first mating edge with the second mating edge, thereby coupling the first and second flooring sections together with a bonded joint.

## Claims

1. A flooring system comprising a first flooring panel and a second flooring panel, each having a corresponding edge, wherein:
the corresponding edges are configured to snap together;
the corresponding edges comprise a two-dimensional profile defining a hinge interface and a locking interface;
the hinge interface includes a first hinge member disposed on the corresponding edge of the first panel and a second hinge member disposed on the corresponding edge of the second panel;
the first hinge member and the second hinge member are configured to engage when the corresponding edges of the first panel and the second panel are brought together at an angle relative to each other and to allow rotation of the first panel and the second panel relative to each other about the hinge interface;
the first hinge member and the second hinge member are further configured to be inseparable when the first panel and the second panel are approximately coplanar;
the locking interface includes a cantilevered arm and a first snap member disposed on the corresponding edge of the first panel and a stabilizing surface and a second snap member disposed on the corresponding edge of the second panel;
the first snap member and the second snap member are configured to mate and define a locked condition for the locking interface when the first hinge member and the second hinge member are engaged and the first panel and the second panel are approximately coplanar;
the cantilevered arm and the stabilizing surface are configured to touch at a contact area when the locking interface is in the locked condition; and
the contact area is disposed directly below the hinge interface.

2. The flooring system according to claim 1, wherein the first panel and the second panel are extruded aluminum profiles, preferably wherein the hinge interface extends along the entire length of the two panels, preferably still wherein the hinge interface is disposed adjacent a top surface of the flooring system.

3. The flooring system according to any one of the preceding claims, wherein the locking interface extends along the entire length of the two panels and/or wherein the locking interface is disposed adjacent a bottom surface of the flooring system.

4. The flooring system according to any one of the preceding claims, wherein the top surface of the flooring system comprises at least two tracks configured to lockingly receive a vehicle seat.

5. The flooring system according to any one of the preceding claims, wherein one of the first hinge member and the second hinge member comprises a hook member, and the other comprises a curved channel configured to receive the hook member, preferably wherein the first hinge member comprises the hook member and the second hinge member comprises the curved channel.

6. The flooring system according to any one of the preceding claims, wherein the first panel and the second panel are in tension at the hinge interface when the locking interface is in the locked condition.

7. The flooring system according to any one of the preceding claims, wherein the cantilevered arm comprises a corresponding surface that touches the stabilizing surface at the contact area when the locking interface is in the locked condition, preferably wherein the corresponding surface is substantially flat and/or, wherein the stabilizing surface is substantially flat.

8. The flooring system according to any one of the preceding claims, wherein the stabilizing surface is approximately parallel to a bottom surface of the second panel.

9. The flooring system according to any one of the preceding claims, wherein the stabilizing surface is oriented at an angle of approximately 1° relative to the bottom surface of the second panel, with the stabilizing surface sloping upward toward an opposite edge of the second panel.

10. The flooring system according to any one of the preceding claims, wherein the hinge interface defines a rotational point about which the first panel and the second panel rotate relative to each other, and wherein the contact area is disposed directly below the rotational point.

11. The flooring system according to any one of the preceding claims, wherein one of the first snap member and the second snap member is a projection, and the other one of the first snap member and the second snap member is a detent, preferably wherein the first snap member is the projection and the second snap member is the detent.

12. The flooring system according to any one of the preceding claims, wherein the first snap member is disposed at a free end of the cantilevered arm, preferably wherein the corresponding surface is disposed between a base and the free end of the cantilevered arm, preferably still wherein the second snap member is disposed at an inner end of the stabilizing surface.

13. The flooring system according to any one of the preceding claims, wherein the cantilevered arm is spring-loaded and exerts a force on the stabilizing surface when the locking interface is in the locked condition.

14. The flooring system according to any one of the preceding claims, wherein a distance between a lower edge of the second hinge member and the stabilizing surface along a radial from a center point of the second hinge member is between approximately 1.4 mm less than and approximately .2 mm greater than a distance between the first hinge member and the first snap member along a radial from a center point of the first hinge member, preferably wherein the distance between the lower edge of the second hinge member and the stabilizing surface along the radial from a=the center point of the second hinge member is between approximately 1 mm less than and approximately .1 mm greater than the distance between the first hinge member and the first snap member along the radial from the center point of the first hinge member, preferably still wherein a distance between a center point of the second hinge member and an inner edge of the second snap member in a plane parallel to a top surface of the flooring system is between approximately 0.75 mm less than and approximately 0.25 mm more than a distance between a center point of the first hinge member and a tip of the first snap member in a plane parallel to the top surface of the flooring system.

15. A method for assembling a flooring system comprising a first flooring panel and a second flooring panel each having a corresponding edge, wherein:
the first flooring panel includes a first hinge member on its corresponding edge;
the second flooring panel includes a second hinge member on its corresponding edge;
the first hinge member and the second hinge member are configured to engage and define a hinge interface when the corresponding edges of the first panel and the second panel are brought together at an angle relative to each other and to allow rotation of the first panel and the second panel relative to each other about the hinge interface into a substantially coplanar orientation; and
the method comprises the steps of:
(a) angularly engaging a portion of a length of the first hinge member of the first flooring panel with the second hinge member of the second flooring panel to thereby engage the hinge interface;
(b) while the first hinge member is angularly engaged with the second hinge member, sliding the first flooring panel longitudinally relative to the second flooring panel to a desired longitudinal position; and
(c) rotating the first flooring panel relative to the second flooring panel about the hinge interface to the substantially coplanar orientation.
